# EUROPEAN PATENT SPECIFICATION

(11) **EP 0 655 025 B1**
(45) Date of publication and mention of the grant of the patent: **29.07.1998**
(21) Application number: 94917998.0
(22) Date of filing: 12.05.1994
(51) Int. Cl.: B25B 29/02

(54) **MECHANICAL TENSIONER**
MECHANISCHE SCHRAUBENSPANNVORRICHTUNG
TENDEUR MECANIQUE

(30) Priority: 16.06.1993 US 78422
(43) Date of publication of application: 31.05.1995
(73) Proprietor: UNEX CORPORATION, South Hackensack New Jersey 07606 (US)
(72) Inventor: JUNKERS, John., K., Saddle River, NJ 07540 (US); KOPPENHOEFER, Peter, Portland, PA 18351 (US)
(74) Representative: Newby, Martin John
(86) International application number: PCT/US94/05454
(87) International publication number: WO 94/29080

(56) References cited:
- DE-A- 2 130 507
- DE-A- 2 328 444
- DE-A- 2 635 678
- US-A- 4 246 810
- US-A- 4 314 690
- US-A- 4 535 656
- US-A- 4 998 453

## Description

The present invention generally relates to mechanical tensioners. In particular, the invention relates to a mechanical tensioner for tensioning a nut and bolt assembly and which does not remain on, but is removed from, an assembly once the nut is tightened.

In industry tensioners are known which use hydraulics to elongate a bolt. Such tensioners basically include a hydraulic jack that reacts on a sleeve around the nut and that is connected to a stud portion which extends through the nut. An oval opening in the sleeve allows an operator to turn the nut down once the stud is elongated by means of a pin which connects with holes in the side of the nut. There is also a known system which, instead of having an oval opening in the sleeve, has a gear mechanism that is turned, once the elongation of the stud has been achieved, so as to exert a greater force when the nut is turned. The one feature which all these tensioners have in common is that they do not turn the nut down strongly enough so as to avoid stud relaxation when the tensioner is taken off. Another known tensioner is disclosed in DE-A-2635678. This tensioner incorporates a first and a second element, the first element being hydraulically engageable so as to move in axial direction of the bolt, the second element being engageable with the nut and the first and second elements engaging with each other so that when the first element is moved axially, the second element pulls the nut and thereby the bolt in axial direction and turns the nut in dependence on the friction torque between the nut and the surface against which the nut is to be tightened.

It is an object of the present invention to provide a mechanical tensioner which avoids the disadvantages of the prior art.

In keeping with this object and with others which will become apparent hereinafter, the present invention resides in a mechanical tensioner as claimed in the ensuing claim 1.

A mechanical tensioner designed in accordance with the present invention avoids the disadvantages of the prior art. A significantly higher degree of tensioning can be achieved, and bolt relaxation after the tensioner is taken off is eliminated. At the same time, the tensioner can be operated with a regular hydraulic torque tool.

Preferred embodiments of the invention are set forth in the appended dependent claims. The invention, both as to its construction and its method of operation, together with additional objects and advantages thereof, will be best understood from the following description of specific embodiments when read in connection with the accompanying drawings, in which:

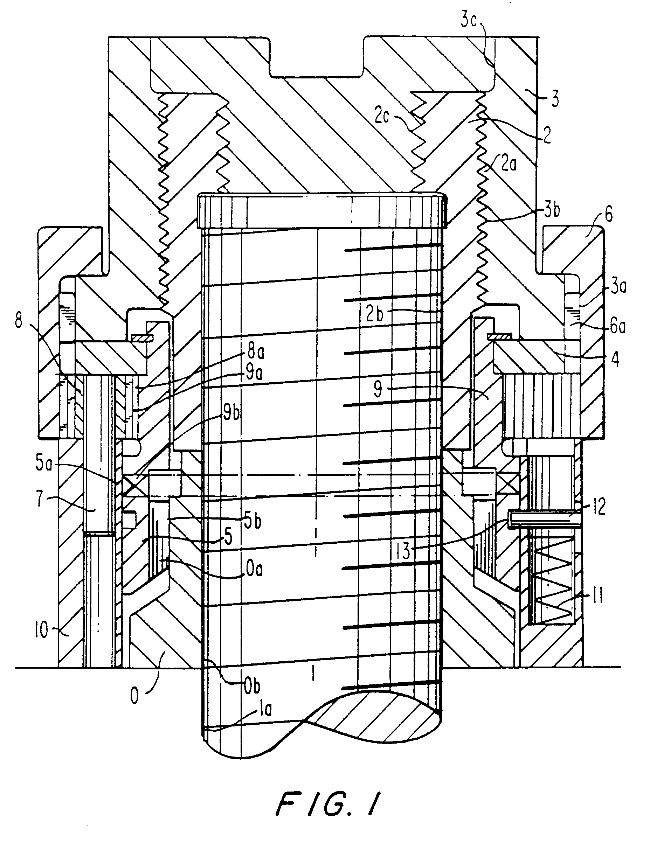

FIG. 1 is a view showing a mechanical tensioner in accordance with the present invention applied to a nut-bolt assembly; and

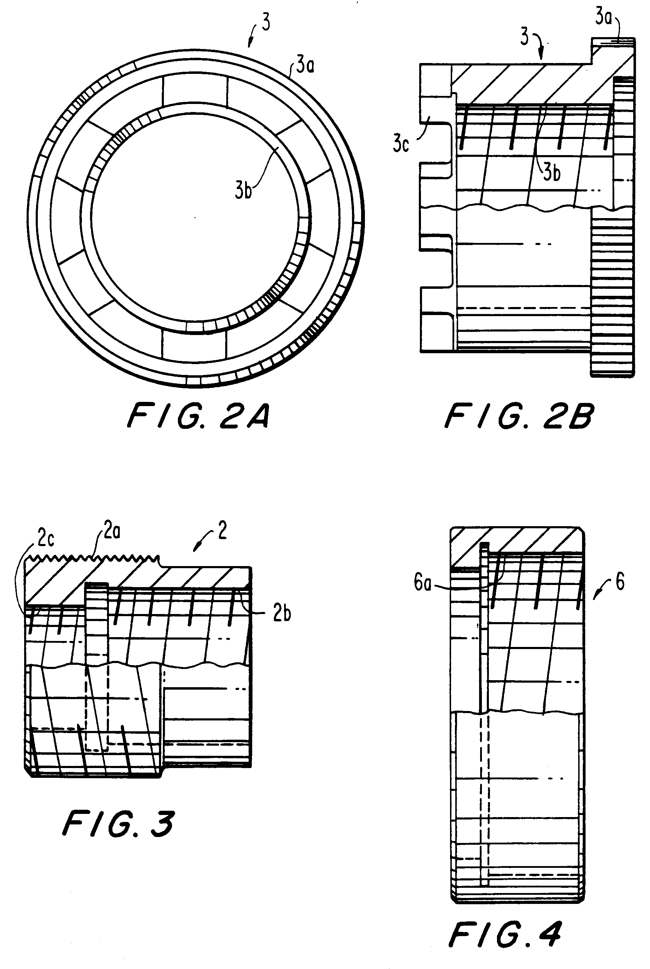

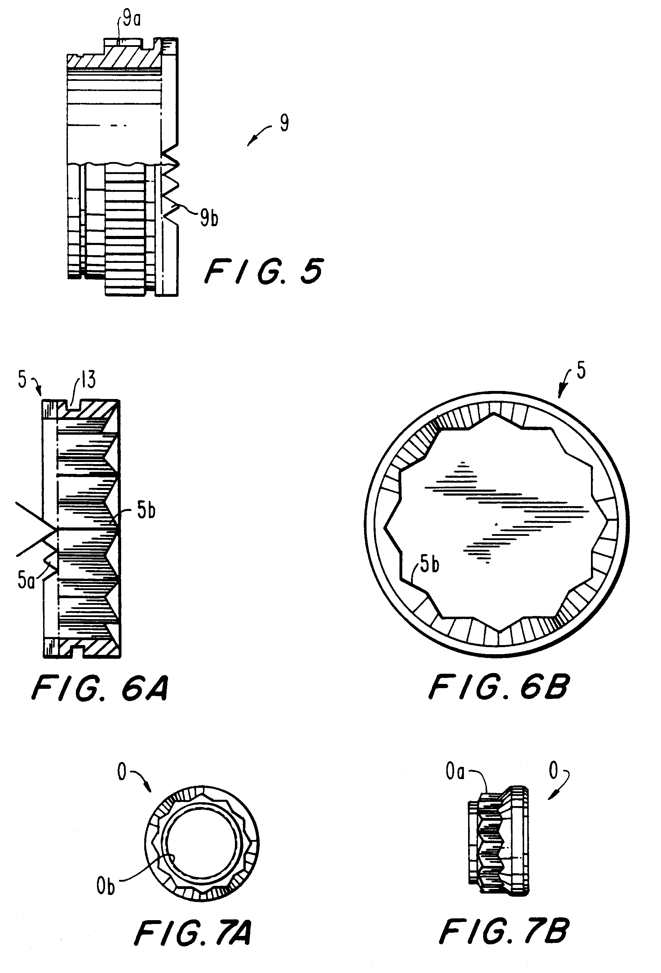

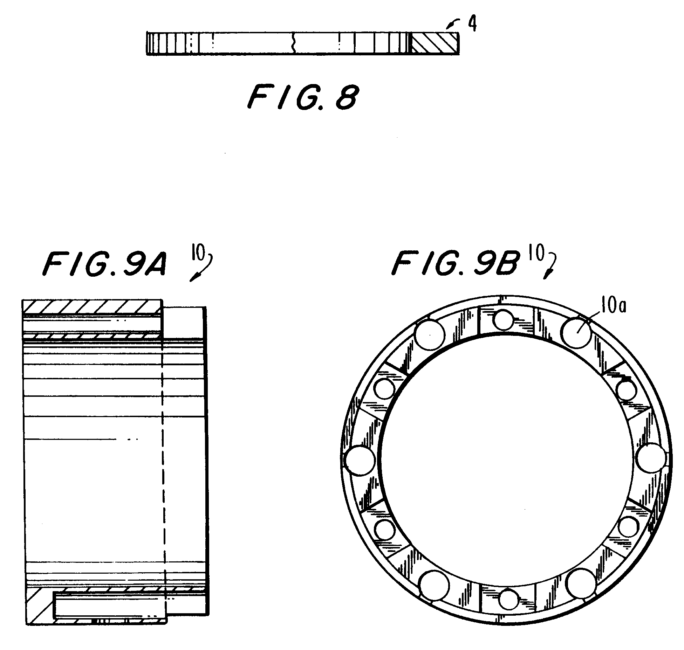

FIGS. 2 - 9 are views showing elements of the inventive mechanical tensioner.

A mechanical tensioner in accordance with the present invention is used for tensioning a nut-bolt assembly which includes a nut 0 and a bolt 1. The nut 0 has outer teeth 0a and an inner thread 0b. The bolt 1 has an outer thread 1a which engages with the inner thread 0b of the nut 0.

The mechanical tensioner has first and second input elements 2 and 3 in the form of sleeves. The first input element 2 has an outer thread 2a and an inner thread 2b which engages with the outer thread 1a of the bolt 1. The first input clement 2 also has engaging formations 2a which are engageable with an actuating tool. The second input element 3 has outer splines or teeth 3a, an inner thread 3b which engages with the outer thread 2a of the first input element 2 and engaging formations 3c engageable by an actuating tool. The threads 2a, 3b and 2b, 1a extend in opposite directions, i.e. one is a right thread and the other is a left thread.

The bottom face of the input element 3 abuts against a hard washer 4. The mechanical tensioner further includes an output element 5 formed as a ring and having facial teeth 5a and inner teeth 5b. The inner teeth 5b engage with the outer teeth 0a of the nut 0. The input element 3 is operatively connected with the output element 5 through a transmission which will be described in detail later on.

The transmission includes a ring gear 6 which has inner splines or teeth 6a engaging with the outer teeth 3a of the input element 3. The transmission further includes a plurality of pins 7 provided with a plurality of gears 8 with outer teeth 8a engaging with the inner teeth 6a of the ring gear 6 and a sungear 9 provided with outer teeth 9a which engage with the outer teeth 8a of the gears 8. The sungear 9 also has facial teeth 9b which engage with the facial teeth 5A of the output element 5. The transmission is formed as a speed increasing transmission. In other words, the speed of the output element 5 is higher than the speed of the input element 3 which is connected with the output element 5 through the transmission. For example the number of teeth in the engagement 3a - 6a can be 90, while the number of teeth in the engagement 8a - 9a can be 72.

The pins are arranged in equally spaced apart openings 10a of a base ring 10 with springs 11 located in these openings. Fixed catches 12 extend over the springs 11 and engage in a groove 13 provided in the outer surface of the output element 5.

The mechanical tensioner in accordance with the present invention operates in the following manner:

The tensioner is arranged on the nut-bolt assembly, and an actuating tool (not shown), for example a hydraulic tool, actuates the tensioner. In particular, the tool engages the engaging formations 2c and 3c of the input elements 2 and 3 and turns the latter in opposite directions with equal force. Since the input element 2 is provided with two threads whereas the input element 3 has only one thread, the friction of the input element 3 is lower. Therefore the input element 2 remains stationary while the input element 3 turns. Under the action of turning of the input element 3, the input element 2 is displaced axially (upwardly in the drawing) and pulls upwardly the end of the bolt 1. On the other hand, the turning of the input element 3 is transmitted to the output element 5 through the above described transmission, and the output element 5 turns the nut 0 so that it pushes against a flange. The output element 5 together with the nut 0 turn with a significantly higher speed than the input element 3 and therefore a high degree of tensioning is obtained. During the operation of the transmission, over-riding is permitted by the power train to prevent damage to the transmission as a result of the different number of teeth in the engagements 3a - 6a and 8a - 9a. When the force, which is to be transmitted in the sun gear 9 to the output element 5, overcomes the force of the spring 11, the teeth 9b slip over the teeth 5a without transmitting a torque.

While in the shown embodiment the mechanical tensioner is applied to the nut-bolt assembly, it can also be used with an assembly of any two other threaded members which are engaged with each other.

While the invention has been illustrated and described as embodied in a mechanical tensioner, it is not intended to be limited to the details shown, since various modifications and structural changes may be made without departing from the present invention.

## Claims

1. A mechanical tensioner for a nut-bolt assembly (0,1), comprising a first and a second input element (2,3) engaging with one another so as to move axially relative to one another when being turned relative to one another, wherein each input element (2,3) is engageable by an actuating tool and wherein the first input element (2) is engageable with the bolt (1) of the nut-bolt assembly, so that when said input elements are turned relative to one another the first input element (2) does not turn but moves axially relative to the second input element (3) so as to pull the bolt (1) in an axial direction, and wherein the mechanical tensioner further comprises an output element (5) engageable with the nut (0) of the nut-bolt assembly to enable turning of said nut, and a transmission (6-9) connecting the second input element (3) with said output element (5) so that, when the second input element (3) is turned, said output element (5) turns through said transmission and thereby turns the nut (0), said transmission (6-9) being formed so that said output element (5) is turnable with a speed which is substantially greater than a speed of turning of said second input element (3) and including means (11) for providing for slip between the output element (5) and the second input element (3) in dependence on the transmitted torque.

2. A mechanical tensioner as defined in claim 1, characterised in that said transmission is formed as a planetary transmission.

3. A mechanical tensioner according to claim 1, characterised in that said transmission includes a ring gear (6) outwardly engaging said second input element (3), a plurality of intermediate gears (8) inwardly engaging said ring gear (6), and a sun gear (9) inwardly engaging said intermediate gears (8) and also engaging said output element (5).

4. A mechanical tensioner according to any one of the preceding claims, characterised in that said slip means include means for periodically interrupting and establishing a connection between said second input element (3) and said output element (5).

5. A mechanical tensioner according to claim 3 or claim 4 when dependent upon claim 3, characterised in that said slip means includes spring means (11) biasing said output element (5) axially toward said sun gear (9) so that when, during operation, a force of the spring means (11) is overcome, engaging elements (9b) of the sun gear slip over engaging elements (5a) of said output element (5) and do not transmit turning from said sun gear (9) to said output element (5).

## Patentansprüche

1. Mechanische Spannvorrichtung für eine Muttern-Schrauben-Anordnung (0, 1), die ein erstes und ein zweites Eingangselement (2, 3) umfaßt, die miteinander derart in Eingriff stehen, daß sie sich bezüglich einander axial bewegen, wenn sie gedreht werden, wobei jedes Eingangselement (2, 3) durch ein Betätigungswerkzeug in Eingriff genommen werden kann und wobei das erste Eingangselement (2) mit der Schraube (1) der Muttern-Schrauben-Anordnung in Eingriff gebracht werden kann, so daß sich bei Drehung der Eingangselemente bezüglich einander das erste Eingangselement (2) nicht dreht, sondern sich bezüglich des zweiten Eingangselements (3) axial bewegt, so daß es die Schraube (1) in einer Axialrichtung zieht, und wobei die mechanische Spannvorrichtung weiterhin ein Ausgangselement (5), das mit der Mutter (0) der Muttern-Schrauben-Anordnung in Eingriff gebracht werden kann, so daß ein Drehen der Mutter ermöglicht wird, und ein Getriebe (6 - 9) umfaßt, das das zweite Eingangselement (3) mit dem Ausgangselement (5) so verbindet, daß bei Drehen des zweiten Eingangselements (3) das Ausgangselement (5) durch das Getriebe gedreht wird und dadurch die Mutter (0) dreht, wobei das Getriebe (6 - 9) so ausgebildet ist, daß das Ausgangselement (5) mit einer Geschwindigkeit gedreht werden kann, die wesentlich höher ist als eine Drehgeschwindigkeit des zweiten Eingangselements (3), und ein Mittel (11) zur Bereitstellung einer Rutschwirkung zwischen dem Ausgangselement (5) und dem zweiten Eingangselement (3) in Abhängigkeit von dem übertragenen Drehmoment bereitstellt.

2. Mechanische Spannvorrichtung nach Anspruch 1, dadurch gekennzeichnet, daß das Getriebe als Planetengetriebe ausgebildet ist.

3. Mechanische Spannvorrichtung nach Anspruch 1, dadurch gekennzeichnet, daß das Getriebe ein Hohlrad (6), das das zweite Eingangselement (3) nach außen in Eingriff nimmt, mehrere Zwischenräder (8), die das Hohlrad (6) nach innen in Eingriff nehmen und ein Sonnenrad (9), das die Zwischenräder (8) nach innen und des weiteren das Ausgangselement (5) in Eingriff nimmt, enthält.

4. Mechanische Spannvorrichtung nach einem der vorhergehenden Ansprüche, dadurch gekennzeichnet, daß das Rutschmittel ein Mittel zum periodischen Unterbrechen und Wiederherstellen einer Verbindung zwischen dem zweiten Eingangselement (3) und dem Ausgangselement (5) umfaßt.

5. Mechanische Spannvorrichtung nach Anspruch 3 oder 4, insofern er von Anspruch 3 abhängig ist, dadurch gekennzeichnet, daß das Rutschmittel ein Federmittel (11) enthält, das das Ausgangselement (5) axial zum Sonnenrad (9) hin vorspannt, so daß, wenn im Betrieb eine Kraft des Federmittels (11) überwunden wird, Eingriffsmittel (9b) des Sonnenrads über Eingriffselemente (5a) des Ausgangselements (5) rutschen und keine Drehung von dem Sonnenrad (9) auf das Ausgangselement (5) übertragen.

## Revendications

1. Tendeur mécanique pour un ensemble écrou-boulon (0,1), comprenant un premier et un deuxième élément d'entrée (2,3) s'engageant mutuellement de manière à se déplacer axialement l'un par rapport à l'autre lorsqu'on les fait tourner l'un par rapport à l'autre, dans lequel chaque élément d'entrée (2,3) est susceptible d'être engagé par une tige d'actionnement, et dans lequel le premier élément d'entrée (2) est susceptible de s'engager avec le boulon (1) de l'ensemble écrou-boulon, de sorte que, lorsqu'on fait tourner lesdits éléments d'entrée l'un par rapport à l'autre, le premier élément d'entrée (2) ne tourne pas mais se déplace axialement par rapport au deuxième élément d'entrée (3) de manière à tirer le boulon (1) dans une direction axiale, et dans lequel le tendeur mécanique comprend en outre un élément de sortie (5) susceptible de s'engager avec l'écrou (0) de l'ensemble écrou-boulon pour permettre la rotation dudit écrou, et une transmission (6-9) connectant le deuxième élément d'entrée (3) audit élément de sortie (5) de sorte que, lorsqu'on fait tourner le deuxième élément d'entrée (3), ledit élément de sortie (5) tourne par le biais de ladite transmission et tourne ainsi l'écrou (0), ladite transmission (6-9) étant formée de sorte que ledit élément de sortie (5) est susceptible de tourner avec une vitesse substantiellement supérieure à une vitesse de rotation dudit deuxième élément d'entrée (3), et comportant un moyen (11) pour permettre un glissement entre l'élément de sortie (5) et le deuxième élément d'entrée (3) en fonction du couple transmis.

2. Tendeur mécanique selon la revendication 1, caractérisé en ce que ladite transmission a la forme d'une transmission planétaire.

3. Tendeur mécanique selon Ta revendication 1, caractérisé en ce que ladite transmission comporte une couronne (6) engageant vers l'extérieur ledit deuxième élément d'entrée (3), une pluralité de roues intermédiaires (8) engageant vers l'intérieur ladite couronne (6), et une roue solaire (9) engageant vers l'intérieur lesdites roues intermédiaires (8) et engageant également ledit élément de sortie (5).

4. Tendeur mécanique selon l'une quelconque des revendications précédentes, caractérisé en ce que ledit moyen de glissement comporte un moyen pour interrompre et établir périodiquement une connexion entre ledit deuxième élément d'entrée (3) et ledit élément de sortie (5).

5. Tendeur mécanique selon la revendication 3 ou la revendication 4 lorsqu'elle dépend de la revendication 3, caractérisé en ce que ledit moyen de glissement comporte un moyen à ressort (11) poussant ledit élément de sortie (5) axialement en direction de ladite roue solaire (9) de sorte qu'en fonctionnement, une force du moyen à ressort (11) soit vaincue, des éléments d'engagement (9b) de la roue solaire glissent par-dessus des éléments d'engagement (5a) dudit élément de sortie (5) et ne transmettent pas de rotation de ladite roue solaire (9) audit élément de sortie (5).
